# EUROPEAN PATENT APPLICATION

(11) **EP 3 769 620 A1**
(43) Date of publication of application: **27.01.2021**
(21) Application number: 20186930.2
(22) Date of filing: 21.07.2020
(51) Int. Cl.: A01N 25/12, A01N 43/653, A01N 47/14, A01P 3/00

(54) **A STABLE AGROCHEMICAL COMPOSITION**

(30) Priority: 23.07.2019 IN 201921029753
(71) Applicant: UPL Limited, Mumbai, 400051 (IN)
(72) Inventor: BOS, Masha Wine Sylvia, 400051 Mumbai, Maharashtra (IN); VAN DER LAAN, Alexander Cornelis, 400051 Mumbai, Maharashtra (IN); DE RUIJTER, Vincent Maurice, 400051 Mumbai, Maharashtra (IN); FAAL DEGHATI, Paymaneh Yousefzadeh, 400051 Mumbai, Maharashtra (IN)
(74) Representative: J A Kemp LLP

(57) **Abstract**

The present invention relates to a stable agrochemical composition. More particularly, the present invention relates to a stable agrochemical composition comprising sulfamoyl compound, amisulbrom with reduced content of toxic metabolite of amisulbrom.

## Description

### Field of the invention

The present invention relates to a stable agrochemical composition. More particularly, the present invention relates to a stable agrochemical composition comprising sulfamoyl compound, amisulbrom with reduced content of toxic metabolite of amisulbrom.

### Background of the Invention

Amisulbrom (1-(N,N-dimethylsulfamoyl)-3-[2-methyl-3-bromo-6-fluoroindol-1-yl]sulfonyl-1,2,4-triazole) is a chemical compound from the group of sulfonic acid amides and triazoles.

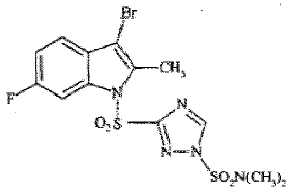

Amisulbrom belongs to the sulfonamide triazole chemical family and is a fungicide which inhibits the mitochondrial respiration of fungi (Qii- Quinone inside inhibitor). It is used against plant pathogens belonging to the class of Oomycetes. It has strong ascarids, rain resistance and rinsing resistance. Amisulbrom is mainly used for prevention and treatment of grapes, cucumber downy mildew, potato and tomato blight.

A major metabolic product of amisulbrom is 3-bromo-6-fluoro-2-methyl-1-(1H-1,2,4-triazol-3-ylsulfonyl)indole (referred hereinafter as IT-4 metabolite). Studies have shown that, toxicity of IT-4 metabolite is much higher than active amisulbrom itself. While analyzing amisulbrom, it requires special attention as the metabolites production and content varies. The route of metabolism of amisulbrom in grapes, tomatoes and lettuce involves a complex series of reactions, including cleavage of the sulfonamide side chain on the triazole ring, debromination, oxidation/hydroxylation, cleavage of the sulfonyl bridge between the indole and triazole moieties and indole ring opening, which resulted in the production of numerous metabolites at low levels.

Studies investigating the nature of amisulbrom residues in processed commodities showed that the compound is progressively degraded to the product 3-bromo-6-fluoro-2-methyl-1-(1H-1,2,4-triazol-3-ylsulfonyl)indole (IT-4) under processing conditions simulating pasteurisation, boiling, brewing, baking and sterilisation. Therefore, the Raw Material Specification (RMS) proposed to include this metabolite in the residue definition for enforcement and risk assessment of processed commodities.

According to Pesticide Fact Sheet, Sept, 2011, issued by USFDA, the registrant, Nissan Chemical Industries Limited, submitted applications requesting establishment of tolerances for residues of amisulbrom in or on grape and tomato, including processed commodities imported into the US. The Agency established tolerances for residues of amisulbrom, including its metabolites and degrades, in or on grape at 0.40 ppm; grape, raisin at 1.0 ppm; tomato at 0.50 ppm; and tomato paste at 1.2 ppm.

The steps during formation of IT-4 metabolite involve cleavage of the sulphonylamino sidechain on the triazole ring to form IT-4. Metabolite IT-4 presented an oral LD₅₀ between 50 and 300 mg/kg showing that the metabolite is more acutely toxic than the parent amisulbrom and requires classification as "toxic if ingested". Recent development of agricultural and horticultural fungicides aimed at controlling agricultural and horticultural diseases and various kinds of agrochemicals are put into practical use. To provide broad coverage, different agrochemicals are combined together to cover varied range of disease-causing factors. Similarly, amisulbrom is combined with other agrochemicals to impart bactericidal as well as agrochemical effect but none of the prior art attempted to reduce the amount of IT-4 metabolite in amisulbrom compositions. Therefore, there is a need to develop a stable composition of amisulbrom having low toxicity by reducing the amount of IT-4.

### Object of the invention

It is an objective of the present invention to provide an agrochemical composition comprising amisulbrom having reduced amount of IT-4 metabolite.

Another objective of the present invention is to provide an agrochemical composition of amisulbrom with wider pest coverage.

Yet another objective of the present invention is to provide an agrochemical composition which is lesser toxic to the environment.

Another objective of the present invention is to provide a process of preparing said compositions of amisulbrom with reduced amount of IT-4 metabolite.

### Summary of the invention

In an aspect, the present invention provides a stable agrochemical composition comprising:
a) at least one sulfamoyl compound; and
b) a toxicity control agent

In another aspect, the present invention provides a stable agrochemical composition comprising:
a) at least one sulfamoyl compound; and
b) a toxicity control agent selected from at least one organic acid and their salts.

In another aspect, the present invention provides a stable agrochemical composition comprising:
a) amisulbrom; and
b) a toxicity control agent selected from organic acid and their salts,
wherein said toxicity control agent regulates formation of undesirable IT-4 metabolite.

In yet another aspect the present invention provides the stable agrochemical composition comprises,
a) at least one sulfamoyl compound;
b) one or more fungicide; and
c) a toxicity control agent selected from at least one organic acid and its salts, said organic acid is selected from carboxylic acid and sulfonic acid,

In yet another aspect the present invention provides solid compositions comprising amisulbrom; and a toxicity control agent selected from at least one organic acid and its salts, wherein said toxicity control agent regulates formation of undesirable IT-4 metabolite.

In another aspect, the present invention provides a process for preparation of stable solid composition comprising:
(a) adding an effective amount of sulfamoyl compound and optionally other auxiliary agent in water and homogenizing the mixture to obtain premix slurry;
(b) adding a toxicity control agent selected from organic acid or its salts to the premix slurry of step (a);
(c) spray drying the slurry of step (b) to obtain granules.

In another aspect, the present invention provides use of said stable agrochemical compositions according to the present invention as a pesticide in agriculture.

In another aspect, the present invention provides a method of controlling unwanted pests said method comprising applying an agrochemically effective amount of stable agrochemical compositions comprising
(a) atleast one sulfamoyl compound; and
(b) a toxicity control agent selected from at least one organic acid or its salts;
wherein said toxicity control agent regulates toxicity of the composition.
to the pests or to their locus.

In another aspect, the present invention provides a method of controlling unwanted pests said method comprising applying to the pests or to their locus, an agrochemically effective amount of stable agrochemical compositions comprising
(a) at least one sulfamoyl compound;
(b) one or more fungicide; and
(c) a toxicity control agent selected from at least one organic acid or its salts;
wherein said toxicity control agent regulates toxicity of the composition.

In another aspect, the present invention provides a kit comprising stable agrochemical composition according to the present invention.

Additional features and advantages of the present invention will be apparent from the detailed description that follows, which illustrates by way of example, the most preferred features of the present invention which are not to be construed as limiting the scope of the invention described herein.

### Brief description of the drawings:

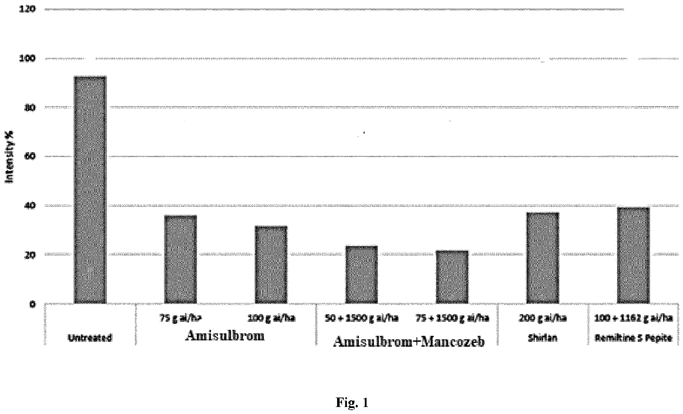

Fig. 1: Assessment of Foliar blight control on potato using present compositions.

### Detailed description of the invention

For the purposes of the following detailed description, it is to be understood that the invention may assume various alternative variations and step sequences, except where expressly specified to the contrary. Moreover, other than in any operating examples, or where otherwise indicated, all numbers expressing, for example, quantities of materials/ingredients used in the specification are to be understood as being modified in all instances by the term "about".

It must be noted that, as used in this specification, the singular forms "a," "an" and "the" include plural referents unless the content clearly dictates otherwise. The terms "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful and is not intended to exclude other embodiments from the scope of the invention.

As used herein, the terms "comprising" "including," "having," "containing," "involving," and the like are to be understood to be open-ended, i.e., to mean including but not limited to.

Without wishing to be bound by theory, the inventors of the present invention surprisingly found that an agrochemical composition comprising amisulbrom with lesser amount of undesirable IT-4 metabolite can be formed by addition of organic acids or their salts; said composition regulates the formation of undesirable IT-4 metabolite in amisulbrom containing compositions thereby making it stable.

Thus, an embodiment of the present invention provides a stable agrochemical composition comprising:
a) atleast one sulfamoyl compound; and
b) a toxicity control agent selected from at least one organic acid and its salts.

In a preferred embodiment, sulfamoyl compound is sulfamoyl-triazole.

In a preferred embodiment, sulfamoyl-triazole is amisulbrom.

In an embodiment the toxicity control agent is selected from weak organic acids and its salts.

In an embodiment the toxicity control agent is selected from carboxylic acids, sulfonic acids and their salts or combinations thereof.

In an embodiment the toxicity control agent is selected from carboxylic acids and their salts.

In an embodiment of the present invention, the carboxylic acid and their salts is selected from the group comprising, formic acid, glyoxilic acid, oxalic acid, acetic acid, glocolic acid, acrylic acid, pyruvic acid, malonic acid, propanoic acid, hydroxypropanoic acid, lactic acid, glyceric acid, fumaric acid, maleic acid, oxaloacetic acid, crotonoic acid, acetoacetic acid, 2-oxobutanoic acid, methylmalonic acid, succinic acid, malic acid, L-tartaric acid, DL-tartaric acid, meso-tartaric acid, dihydroxytartaric acid, butanoic acid, isobutanoic acid, hydroxybutanoic acid, itaconic acid, mesaconic acid, oxoglutaric acid, glutaric acid, methylsuccinic acid, valeric acid, isovaleric acid, pivalic acid, phenol, cis-aconitic acid, trans-aconitic acid, ascorbic acid, citric acid, isocitric acid, adipic acid, caproic acid, benzoic acid, salicylic acid, gentisic acid, protocatechuic acid, gallic acid, cyclohexane carboxylic, pimelic acid, phthalic acid, isophthalic acid, terephthalic acid, phenylacetic acid, toluic acid, m-toluic acid, p-toluic acid, mandelic acid, homogentistic acid, suberic acid, octanoic acid, cinnamic acid, nonanoic acid and their salts or combinations thereof.

In one preferred embodiment of the present invention, the carboxylic acid used as a toxicity control agent is citric acid.

In one preferred embodiment of the present invention, the carboxylic acid used as a toxicity control agent is tartaric acid.

In another preferred embodiment the salts of carboxylic acid used as toxicity control agent is selected from alkali and alkaline earth metal salts of carboxylic acid.

According to an embodiment of the present invention, the alkali and alkaline earth metal salts of carboxylic acid is selected from the group comprising, diammonium hydrogen citrate, triammonium citrate, calcium acetate, calcium formate, calcium hydrogen citrate, calcium lactate, iron(II) formate, dipotassium hydrogen citrate, tripotassium citrate, potassium acetate, potassium formate, potassium dihydrogen citrate, potassium lactate, magnesium acetate, magnesium formate, magnesium hydrogen citrate, magnesium lactate, disodium hydrogen citrate, trisodium citrate, sodium acetate, sodium formate, sodium dihydrogen citrate, sodium ascorbate, sodium lactate, ammonium acetate, ammonium formate, ammonium dihydrogen citrate, ammonium ascorbate or ammonium lactate combinations thereof.

Typically, the alkali and alkaline earth metal salts of carboxylic acid is selected from the group comprising calcium hydrogen citrate, triammonium citrate, calcium hydrogen citrate, potassium dihydrogen citrate, magnesium hydrogen citrate, disodium hydrogen citrate and ammonium dihydrogen citrate, sodium acetate, disodium succinate or combinations thereof.

In another embodiment the toxicity control agent is selected from sulfonic acids and their salts.

In an embodiment, the sulphonic acids is selected from the group comprising lignosulphonic acid, benzene sulphonic acid, benzylnaphthalene sulphonic acid, butylnaphthalene sulphonic acid, isopropylnaphthalene sulphonic acid, toluene sulphonic acid and their salts.

In an embodiment, the salts of sulphonic acids are selected from alkali and alkaline earth metal salts.

In an embodiment, the alkali and alkaline earth metal salts of sulfonic acid is selected from the group comprising of calcium lignosulfonate, magnesium lignosulfonate, barium lignosulfonate, potassium lignosulfonate and sodium lignosulfonate.

In one preferred embodiment of the present invention, the toxicity control agent is is calcium lignosulfonate.

In one preferred embodiment of the present invention, the toxicity control agent is sodium lignosulfonate.

In one preferred embodiment the toxicity control agent is combination of carboxylic acids and sulfonic acids or their salts.

In an embodiment, the present invention provides a stable agrochemical composition comprising from about 0.1% to about 70% w/w, preferably from about 1% to about 50% w/w of sulfamoyl compound of the total weight of the composition.

In a preferred embodiment of the present invention, the stable agrochemical composition comprises from about 10% to about 40% w/w sulfamoyl compound of the total weight of the composition.

In an embodiment, the present invention provides a stable agrochemical composition comprising organic acid and its salts in an amount from about 0.1% to about 70% w/w and preferably from about 1% to about 50% w/w of the total weight of the composition, as toxicity controlling agent.

In a preferred embodiment of the present invention, the stable agrochemical composition comprises from about 10% to about 40% w/w of organic acids and its salts of the total weight of the composition.

In another aspect, the present invention provides a stable agrochemical composition comprising:
a) at least one sulfamoyl compound; and
b) a toxicity control agent selected from at least one organic acid and its salts
wherein said toxicity control agent is selected from carboxylic acids, sulfonic acids or their salts.

In another aspect, the present invention provides a stable agrochemical composition comprising:
a) at least one sulfamoyl compound; and
b) combination of carboxylic acids and sulfonic acids or their salts as toxicity control agent.

In an embodiment of the present invention, the stable agrochemical composition further comprises one or more fungicides.

In an embodiment of the present invention, one or more fungicide which are used in combination with sulfamoyl compound in the composition is selected from the group comprising, aliphatic nitrogen fungicides include: butylamine, cymoxanil, dodicin, dodine, guazatine, iminoctadine, anilide fungicides: cyprofuram, flusulfamide, nicobifen, ofurace, oxadixyl, pyracarbolid, thifluzamide, and tiadinil. Benzanilide fungicides include: benodanil, flutolanil, mebenil, mepronil, salicylanilide, and tecloftalam. Furanilide fungicides include: cyclafuramid, fenfuram, furcarbanil, furmecyclox, and methfuroxam. Oxathiin fungicides include: carboxin, and oxycarboxin. Antibiotic fungicides include: blasticidin-S, cycloheximide, griseofulvin, kasugamycin, natamycin, polyoxins, polyoxorim, streptomycin, and validamycin. Strpbin fungicides include: azoxystrobin, dimoxystrobin, kresoxim-methyl, metominostrobin, picoxystrobin, pyraclostrobin, and trifloxystrobin. Aromatic fungicides include: biphenyl, chloroneb, chlorothalonil, cresol, dicloran, hexachlorobenzene, nitrothal-isopropyl, pentachlorophenol, quintozene, sodium pentachlorophenoxide, and tecnazene. Benzimidazole fungicides include: benomyl, carbendazim, chlorfenazole, cypendazole debacarb, fuberidazole, mecarbinzid, rabenzazole, and thiabendazole. Benzimidazole precursor fungicides include: furophanate, thiophanate, and thiophanate methyl. Carbamate fungicides include: diethofencarb, furophanate, iprovalicarb, propamocarb, thiophanate, and thiophanate-methyl. Benzimidazolyl fungicides include:, benomyl, carbendazim, cypendazole debacarb, mecarbinzid; conazole fungicides: azaconazole, bromuconazole, climbazole, clotrimazole, cyproconazole, diclobutrazol, difenoconazole, diniconazole, , diniconazole-M, epoxiconazole, etaconazole, fenbuconazole, fluquinconazole, flusilazole, flutriafol, furconazole, furconazole-cis, hexaconazole, imazalil, imibenconazole, ipconazole, metconazole, myclobutanil, oxpoconazole, penconazole, prochloraz, propiconazole, quinconazole, simeconazole, tebuconazole, tetraconazole, triadimefon, triadimenol, triflumizole, triticonazole, and uniconazole. Copper fungicides include: Bordeaux mixture, Burgundy mixture, Cheshunt mixture, copper acetate, copper carbonate, basic copper hydroxide, copper naphthenate, copper oleate, copper sulfate, basic copper, zinc chromate, cufraneb, cuprobam, cuprous oxide, mancopper oxine, and copper. Dicarboximide fungicides include: captafol, captan, folpet, iprodione, procymidone, thiochlorfenphim, and vinclozolin. Dinitrophenol fungicides include: binapacryl, dinobuton, dinocap, dinocap-6, dinocton, dinopenton, dinosulfon, dinoterbon, DNOC, and sultropen. Dithiocarbamate fungicides include: azithiram, carbamorph, cufraneb, cuprobam, dazomet, disulfiram, etem, ferbam, mancopper, mancozeb, maneb, metam, metiram, milneb, nabam, polycarbamate, propineb, tecoram, thiram, zineb, and ziram. Indazole fungicides include: cyazofamid, fenapanil, fenamidone, glyodin, iprodione, isovaledione, pefurazoate, triazoxide; organomercurv fungicides include methylmercury acetate, ethylmercury bromide, ethylmercury chloride, ethylmercury phosphate, 2- methoxyethylmercury chloride, methylmercury benzoate, methylmercury dicyandiamide, phenylmercuriurea, phenylmercury acetate, phenylmercury chloride, phenylmercury nitrate, phenylmercury salicylate, thiomersal, and tolylmercury acetate. Morpholine fungicides include aldimorph, benzamorf, carbamorph, dimethomorph, dodemorph, and fenpropimorph, tridemorph. Organophosphorus fungicides include ampropylfos, ditalimfos, edifenphos, fosetyl, hexylthiofos, iprobenfos, phosdiphen, pyrazophos, tolclofos-methyl, and triamiphos. Organotin fungicides include decafentin, fentin, and tributyltin oxide, Oxazole fungicides: chlozolinate, dichlozoline, drazoxolon, famoxadone, hymexazol, metazoxolon, myclozolin, and oxadixyl. Phenylsulfamide fungicides include: dichlofluanid, and tolylfluanid. Phenylurea fungicides including pencycuron. Polysulfide fungicides include: barium polysulfide, calcium polysulfide, potassium polysulfide, and sodium polysulfide. Pyridine fungicides include buthiobate, dipyrithione, fluazinam, nicobifen, pyridinitril, pyrifenox, pyroxychlor, and pyroxyfur. Pyrimidine fungicides include: bupirimate, cyprodinil, diflumetorim, dimethirimol, ethirimol, fenarimol, ferimzone, mepanipyrim, nuarimol, pyrimethanil, and triarimol. Pyrrole fungicides include: fenpiclonil, fludioxonil, and fluoroimide. Quinoline fungicides include: ethoxyquin, halacrinate, 8-hydroxyquinoline sulfate, quinacetol, and quinoxyfen. Quinone fungicides include: benquinox, chloranil, dichlone, and dithianon. Quinoxaline fungicides include chinomethionat, chlorquinox, thioquinox thiazole fungicides: ethaboxam, etridiazole, metsulfovax, octhilinone, TCMTB, and thiadifluor. Thiocarbamate fungicides include: methasulfocarb and prothiocarb. Triazole fungicides include: bitertanol, fluotrimazole, triazbutil see also conazole fungicides xylylalanine fungicides: benalaxyl, furalaxyl, metalaxyl, and metalaxyl-M. Unclassified fungicides include: acypetacs, allyl alcohol, anilazine, bentaluron, benzalkonium chloride, benzamacril, benzohydroxamic acid, bethoxazin, bithionol, carpropamid, carvone, chlobenthiazone, chloraniformethan, chloropicrin, cyflufenamid, dazomet, DBCP, dehydroacetic acid, dichlorophen, diclocymet, diclomezine, diethyl pyrocarbonate, diphenylamine, fenaminosulf, fenhexamid, fenitropan, fenoxanil, fenpropidin, ferimzone, flumetover, formaldehyde, furametpyr, hexachlorobutadiene, isoprothiolane, methyl bromide, methyl isothiocyanate, metrafenone, nitrostyrene, nitrothal-isopropyl, 2- phenylphenol, phthalide, probenazole, pyroquilon, quinazamid, silthiofam sodium, orthophenylphenoxide, spiroxamine, thicyofen, tioxymid, trichlamide, tricyclazole, triforine, zarilamid, zinc naphthenate, and zoxamide.

In a preferred embodiment of the present invention, the one or more fungicide for combination is selected from dithiocarbamate fungicides include: azithiram, carbamorph, cufraneb, cuprobam, dazomet, disulfiram, etem, ferbam, mancopper, mancozeb, maneb, metam, metiram, milneb, nabam, polycarbamate, propineb, tecoram, thiram, zineb, and ziram.

In a preferred embodiment of the present invention, the stable agrochemical composition further comprises mancozeb.

In an embodiment the present invention provides a stable agrochemical composition comprising amisulbrom and mancozeb.

In an embodiment, the present invention provides a stable agrochemical composition comprising from about 1% to about 99% w/w and preferably from about 10% to about 95% w/w fungicide of the total weight of the stable agrochemical composition.

In a preferred embodiment of the present invention, the stable agrochemical composition comprises from about 50% to about 90% w/w fungicide of the total weight of the stable agrochemical composition.

According to an embodiment of the present invention, the stable agrochemical composition comprises,
d) atleast one sulfamoyl compound;
e) one or more fungicide; and
f) a toxicity control agent selected from organic acid and its salts consisting of carboxylic acids, sulfonic acids and their salt,
wherein said toxicity control agent regulates formation of undesirable IT-4 metabolite.

According to another embodiment of the present invention, the stable agrochemical composition comprises
a) amisulbrom;
b) mancozeb; and
c) a toxicity control agent selected from at least one organic acid and its salts consisting of carboxylic acids, sulfonic acids and their salts,
wherein said toxicity control agent regulates formation of undesirable IT-4 metabolite.

The stable agrochemical composition of the present invention may further comprise one or more dispersants, wetting agents, fillers, surfactants, anticaking agents, pH-regulating agents, preservatives, biocides, antifoaming agents, colorants and other formulation aids.

The dispersants may be selected from ionic and nonionic dispersants to enable disintegration of granules in water with ease, such as salts of polystyrene sulphonic acids, salts of polyvinylsulphonic acids, salts of naphthalenesulphonic acid/formaldehyde condensates, salts of condensates of naphthalenesulphonic acid, phenolsulphonic acid and formaldehyde, and salts of lignosulphonic acid, polyethylene oxide/polypropylene oxide block copolymers, polyethylene glycol ethers of linear alcohols, reaction products of fatty acids with ethylene oxide and/or propylene oxide, furthermore polyvinyl alcohol, polyvinylpyrrolidone, copolymers of polyvinyl alcohol and polyvinylpyrrolidone and copolymers of (meth)acrylic acid and (meth)acrylic esters, furthermore alkyl ethoxylates and alkylarylethoxylates ethoxylated alkylarylphosphated and sulphated ester. The preferred dispersing agents include derivative of ethoxylates of vegetable oil or a mixture of one or more of these; or styrene acrylic polymers or mixtures thereof.

The wetting agents may be selected from soaps; silicone oil, magnesium stearate, salts of aliphatic monoesters of sulphuric acid including but not limited to sodium lauryl sulphate; sulfoakylamides and salts thereof including but not limited to N-methyl-N-oleoyltaurate sodium salt; alkylarylsulfonates including but not limited to akylbenzenesulfonates; akylnaphthalenesulfonates and salts thereof and salts of ligninsulfonic acid.

In an embodiment, fillers may be selected from insoluble fillers and soluble fillers.

In an embodiment, fillers may be selected preferably from precipitated silica and diatomaceous earth kaolin.

In an embodiment, suitable antifoams may, preferably be, silicones, long-chain alcohols and salts of fatty acids.

Suitable colorants (for example in red, blue and green) are, preferably, pigments, which are sparingly soluble in water, and dyes, which are water-soluble. Examples are inorganic coloring agents (for example iron oxide, titanium oxide, and iron hexacyanoferrate) and organic coloring agents (for example alizarin, azo and phthalocyanin coloring agents).

The stable agrochemical composition of the present invention is preferably formulated as a solid composition including, but not limited to, dust, powder, granules, pellets, tablets, dry flowable, wettable powder or water dispersible granules.

In a preferred embodiment, the stable agrochemical composition of the present invention is a Water Dispersible Granular formulation (WDG).

In an embodiment, the present invention provides a stable solid agrochemical composition comprising from about 0.1% to about 70% w/w sulfamoyl compound, from about 0.1% to about 70% w/w toxicity control agent of the total weight of the composition.

In another embodiment, the composition comprising from about 0.1% to about 70% w/w sulfamoyl compound, from about 0.1% to about 70% w/w of combination of carboxylic acid and alkaline earth metal salt of lignosulfonic acid as toxicity control agent.

In another embodiment, the composition comprising from about 0.1% to about 70% w/w amisulbrom, from about 0.1% to about 70% w/w of combination of carboxylic acid and alkaline earth metal salt of lignosulfonic acid as toxicity control agent.

In another embodiment, the composition comprising from about 0.1% to about 70% w/w amisulbrom, from about 0.1% to about 70% w/w of as toxicity control agent, which is a combination of carboxylic acid selected from tartaric acid or citric acid and alkaline earth metal salt of lignosulfonic acid selected from calcium lignosulfonate, sodium lignosulfonate, sodium diisopropyl naphthalene sulfonate or combinations thereof.

In another embodiment, the composition comprising from about 0.1% to about 70% w/w of amisulbrom, from about 1% to about 99% w/w of mancozeb, from about 0.1% to about 70% w/w of toxicity control agent, which is a combination of carboxylic acid selected from tartaric acid or citric acid and alkaline earth metal salt of lignosulfonic acid selected from calcium lignosulfonate, sodium lignosulfonate, sodium diisopropyl naphthalene sulfonate or combinations thereof.

In an embodiment, the present invention provides a stable agrochemical composition comprising from about 0.1% to about 70% w/w sulfamoyl compound, from about 1% to about 99% w/w another fungicide and from about 0.1% to about 70% w/w toxicity control agent of the total weight of the composition.

In an embodiment, the present invention provides a stable solid agrochemical composition comprising from about 0.1% to about 70% w/w sulfamoyl compound, from about 1% to about 99% w/w another fungicide and from about 0.1% to about 70% w/w alkaline earth metal salt of lignosulfonic acid of the total weight of the stable agrochemical composition.

In a preferred embodiment, the present invention provides a stable agrochemical composition comprising from about 0.1% to about 70% w/w sulfamoyl compound, from about 1% to about 90% w/w another fungicide and from about 0.1% to about 40% w/w alkaline earth metal salt of lignosulfonic acid of the total weight of the stable agrochemical composition.

In a preferred embodiment, the present invention provides a stable agrochemical composition comprising from about 1% to about 40% w/w amisulbrom, from about 50% to about 90% w/w mancozeb and from about 1% to about 40% w/w calcium lignosulfonate of the total weight of the stable agrochemical composition.

In another preferred embodiment, the present invention provides a stable solid agrochemical composition comprising from about 1% to about 40% w/w amisulbrom, from about 50% to about 90% w/w mancozeb and from about 1% to about 40% w/w calcium lignosulfonate and from about 0.1% to about 70% w/w carboxylic acid and their salts of the total weight of the stable agrochemical composition.

In an embodiment, the present invention provides a stable agrochemical composition comprising from about 0.1% to about 70% w/w sulfamoyl compound, from about 1% to about 99% w/w another fungicide and from about 0.1% to about 70% w/w carboxylic acid and their salts of the total weight of the stable agrochemical composition.

In a preferred embodiment, the present invention provides a stable agrochemical composition comprising from about 1% to about 40% w/w sulfamoyl compound, from about 50% to about 90% w/w another fungicide and from about 0.5% to about 40% w/w carboxylic acid and their salts of the total weight of the stable agrochemical composition.

In a preferred embodiment, the present invention provides a stable agrochemical composition comprising from about 10% to about 40% w/w amisulbrom, from about 50% to about 90% w/w mancozeb and from about 10% to about 40% w/w tartaric acid of the total weight of the stable agrochemical composition.

According to an embodiment of the present invention, a process for preparation of stable agrochemical composition comprising steps of:
(a) adding an effective amount of sulfamoyl compound and optionally other auxiliary agents in water and homogenizing them to obtain premix slurry;
(b) adding a toxicity control agent selected from at least one organic acid or its salts to the premix slurry of step (a);
(c) spray drying the slurry to obtain granules;

The process step of "spray drying" is conventionally known in the art. The conventional process for spray drying generally involves concentrating the input slurry, atomization of the slurry, droplet-hot gas contacting, evaporative drying of the droplets and separation of the spray dried granules. The granules thus obtained are optionally dried to remove excess moisture.

In an embodiment of the present invention, a process for preparation of stable agrochemical composition comprising (a) atleast one sulfamoyl compound; (b) at least one more fungicide; and (c) a toxicity control agent selected from organic acid and their salts thereof, said process comprising steps of:
(a) adding effective amount of sulfamoyl compound and optionally other auxiliary agents in water and homogenizing the mixture to obtain premix slurry;
(b) adding at least one organic acid or its salt, one or more fungicide to the premix slurry and homogenizing it to obtain mixture;
(c) spray drying the mixture to obtain granules;

In another embodiment of the present invention, the process for the preparation of a stable agrochemical composition comprising: (a) blending effective amount of sulphamoyl compound with at least one auxiliary agent selected from at least one wetting agent, at least one dispersing agent, at least one antifoam, at least one stabilizing agent, at least one surfactant or combinations thereof and water, to prepare premix slurry; (b) homogenizing said premix slurry by wet milling to obtain particles reduced to D₅₀ below 5 micron and D₉₀ below 10 micron; (c) adding organic acid or its salts, optionally adding one or more fungicide and other adjuvants in the premix slurry and homogenizing it to obtain a mixture; (d) spray drying the mixture of step (c) through nozzle in controlled inlet and outlet temperature to obtain granules of 100-450 micron; (e) optionally drying the granules obtained in a fluid bed dryer to remove extra moisture; and (f) packing the dried granules.

In an embodiment of the present invention, a process for preparation of stable agrochemical composition comprising steps of:
(a) adding effective amount of sulfamoyl compound wherein sulfamoyl compound is amisulbrom and optionally other auxiliary agents in water and homogenizing them to obtain premix slurry;
(b) adding calcium lignosulfonate as toxicity control agent and another fungicide, mancozeb to the premix slurry and homogenizing it to obtain mixture;
(c) spray drying the mixture to obtain granules.

In a preferred embodiment, the granules obtained by spray-drying are further subject to drying in fluidized bed dryer to remove excess moisture.

In an embodiment of the present invention, the stable agrochemical composition according to the present invention may be dried under controlled conditions typically in an air flow, by spray drying, by evaporation, by fluidized bed drying, etc.

In an embodiment of the present invention, pH of the stable agrochemical composition ranges from about 4 to about 7.

In a preferred embodiment of the present invention, pH of the stable agrochemical composition ranges from about 5 to about 7.

In an embodiment, composition developed according to the present invention has IT-4 content below 50 ppm.

In a preferred embodiment, composition developed according to the present invention has IT-4 content below 30 ppm.

According to an embodiment of the present invention, the stable agrochemical composition is used as pesticide. Typically, the stable agrochemical composition is used as fungicide.

According to an embodiment of the present invention, the stable agrochemical composition is useful in combatting fungal infection and exhibits remarkable agrochemical activities for pathogenic fungi such as foliar late blight or alternaria leaf spot. In particular, present compositions

In another aspect, the present invention further provides a method of controlling unwanted pests said method comprising applying to the pests or to their locus, an agrochemically effective amount of stable agrochemical compositions comprising
(a) atleast one sulfamoyl compound; and
(b) a toxicity control agent selected from at least one organic acid and/or their salts; wherein said toxicity control agent regulates formation of undesirable IT-4 metabolite.

According to an embodiment of the present invention, a method of controlling unwanted pests said method comprising applying an agrochemically effective amount of stable agrochemical compositions comprising
(a) amisulbrom; and
(b) at least one organic acid and their salt selected from carboxylic acids, sulfonic acids and their salts or combinations thereof as toxicity control agent, wherein said toxicity control agent regulates formation of undesirable IT-4 metabolite;
to the pests or to their locus.

In another aspect, the present invention further provides a method of controlling unwanted pests said method comprising applying an agrochemically effective amount of stable agrochemical compositions comprising
(a) atleast one sulfamoyl compound;
(b) one or more fungicide; and
(c) a toxicity control agent selected from organic acid its salts; wherein said toxicity control agent regulates formation of undesirable IT-4 metabolite.
to the pests or to their locus.

According to an embodiment of the present invention, the method of controlling unwanted pests said method comprising applying to the pests or to their locus an agrochemically effective amount of a stable agrochemical composition comprising:
a) amisulbrom;
b) mancozeb; and
c) a toxicity control agent selected from organic acid and their salt consisting of carboxylic acids, sulfonic acids and their salts respectively, wherein said toxicity control agent regulates formation of undesirable IT-4 metabolite;
to the pests or to their locus.

According to an embodiment of the present invention, a kit comprising stable agrochemical composition according to the present invention as a pesticide.

According to an embodiment of the present invention, a kit is provided. The kit comprises of a plurality of components, each of which components may include at least one, or more, of the ingredients of the stable agrochemical composition of the present invention.

According to an embodiment of the present invention, the present invention provides a kit of the stable agrochemical composition comprising:
a) atleast one sulfamoyl compound; and
b) a toxicity control agent selected from at least one organic acid and their salts thereof.

According to an embodiment of the present invention, the various components of the stable agrochemical composition can be used individually or already partially or completely mixed with one another to prepare the composition according to the invention. It is also possible for them to be packaged and used further as combination composition such as a kit of parts.

According to an embodiment of the present invention, the storage stable insecticidal composition comprising (a) 0.1% to about 70% w/w sulfamoyl compound, and (b) 0.1% to about 70% w/w toxicity control agent selected from organic acid and their salts thereof is in the form of a kit with single pack or multi pack.

All the features described herein may be combined with any of the above aspects, in any combination.

It will be understood that the specification and examples are illustrative but not limitative of the present invention and that other embodiments within the spirit and scope of the invention will suggest themselves to those skilled in the art. Other embodiments can be practiced that are also within the scope of the present invention. The following examples illustrate the invention, but by no means intend to limit the scope of the claims.

### EXAMPLES

Sodium diisopropyl naphthalene sulfonate (Supragil WP), Calcium lignosulfonate (Borresperse CA), Sodium lignosulfonate (Greensperse S7), SAG 1572

### Example 1: Preparation of Amisulbrom 30 and Mancozeb 600 g/Kg WDG

| **Ingredients** | **Quantity (%w/w)** |
|---|---|
| Amisulbrom technical (purity 98.5%) | 3.1 |
| Mancozeb technical (purity 86%) | 70.4 |
| Sodium diisopropyl naphthalene sulfonate (Supragil WP) | 2.9 |
| Calcium lignosulfonate (Borresperse CA) | 3.4 |
| Sodium lignosulfonate (Greensperse S7) | 12.9 |
| Kaolin clay | 7.2 |
| SAG 1572 | 0.1 |
| Total | 100 |

The required amount of Amisulbrom was blended with Supragil WP, SAG 1572 in water to form a premix slurry. The mixture is homogenized by stirring and colloid mill. Subsequently the slurry is milled using a bead mill until the particle size was reduced to D₅₀ below 5 micron and D₉₀ below 10 micron. The wet Amisulbrom premix and the required amount of Mancozeb were blended with Borresperse CA, Greensperse S7, Kaolin clay and SAG 1572 in water to obtain mixture. The mixture is homogenized by stirring and colloid mill. The slurry was then sprayed into the spray dryer through nozzles to give droplets with an average size in the range of 150-500 micrometer. In the spray-dryer, a hot inert air stream evaporated the water out of the droplets to give spherical granules with a size ranging from 100-450 micron. Dust formed during the drying process was removed in a separate stream. Subsequently, the granules were further dried in a fluid bed dryer to remove the remaining moisture.

### Example 2: Preparation of Amisulbrom 30 and Mancozeb 600 g/Kg WDG

| **Ingredients** | **Quantity (w/w)** |
|---|---|
| Amisulbrom Technical (purity 98.5%) | 3.05 |
| Mancozeb Technical (purity 85%) | 70.59 |
| Sodium diisopropyl naphthalene sulfonate (Supragil WP) | 2.88 |
| Sodium lignosulfonate (Reax 88 B) | 13.01 |
| Rhodorsil antifoam 432 | 0.1 |
| Calcium lignosulfonate (Borresperse CA) | 3.5 |
| Kaolin clay | 6.87 |
| Total | 100 |

The Amisulbrom, mancozeb, Supragil WP, Reax 88 B, rhodorsil antifoam 432, Borresperse CA and kaolin clay are mixed in a given ratio shown above and granules were prepared as per the process of Example 1.

### Example 3: Preparation of Amisulbrom 30 and Mancozeb 600 g/Kg WDG

| **Ingredients** | **Quantity (%w/w)** |
|---|---|
| Mancozeb technical (purity 85%) | 70.6 |
| Amisulbrom technical (purity 98.5%) | 3.05 |
| Sodium diisopropyl naphthalene sulfonate (Supragil WP) | 2.9 |
| Calcium lignosulfonate (Borresperse CA) | 3.5 |
| Sodium lignosulfonate (Greensperse S7) | 13 |
| Tartaric acid | 1.5 |
| Kaolin clay | 5.4 |
| SAG 1572 | 0.1 |
| Total | 100 |

The amisulbrom, mancozeb, supragil WP, borresperse CA, greensperse S7, tartaric acid, kaolin clay and SAG 1572 are mixed in a given ratio shown above and granules were prepared as per the process of Example 1.

### Example 4: Preparation of Amisulbrom 30 and Mancozeb 600 g/kg WDG

| **Ingredients** | **Quantity (%w/w)** |
|---|---|
| Mancozeb technical (purity 85%) | 70.6 |
| Amisulbrom technical (purity 98.5%) | 3.05 |
| Sodium diisopropyl naphthalene sulfonate (Supragil WP) | 2.9 |
| Calcium lignosulfonate (Borresperse CA) | 16.5 |
| Kaolin clay | 6.9 |
| SAG 1572 | 0.1 |
| Total | 100 |

The Amisulbrom, mancozeb, Supragil WP, Borresperse CA, kaolin clay and SAG 1572 are mixed in a given ratio shown above and granules were prepared as per the process of Example 1.

### Example 5: Preparation of Amisulbrom 30 and Mancozeb 600 g/kg WDG

| **Ingredients** | **Quantity (%w/w)** |
|---|---|
| Mancozeb technical (purity 85%) | 70.6 |
| Amisulbrom technical (purity 98.5%) | 3.05 |
| Sodium diisopropyl naphthalene sulfonate (Supragil WP) | 2.3 |
| Calcium lignosulfonate | 19.5 |
| Kaolin clay | 4.45 |
| SAG 1572 | 0.1 |
| Total | 100 |

The Amisulbrom, mancozeb, Supragil WP, Borresperse CA, kaolin clay and SAG 1572 are mixed in a given ratio shown above and granules were prepared as per the process of Example 1.

### Example 6: Preparation of Amisulbrom 30g/Kg WDG

| **Ingredients** | **Quantity (%w/w)** |
|---|---|
| Amisulbrom technical | 3.1 |
| Sodium diisopropyl naphthalene sulfonate (Supragil WP) | 2.9 |
| Calcium lignosulfonate (Borresperse CA) | 16.5 |
| SAG 1572 | 0.1 |
| Kaolin clay | q.s |
| Total | 100 |

The required amount of Amisulbrom was blended with Supragil WP, SAG 1572 in water to form a premix slurry. The mixture is homogenized by stirring and colloid mill. Subsequently the slurry is milled using a bead mill until the particle size was reduced to D₅₀ below 5 micron and D₉₀ below 10 micron. The wet Amisulbrom premix was blended with Borresperse CA, Kaolin clay and SAG 1572 in water to obtain mixture. The mixture is homogenized by stirring and colloid mill. The slurry was then sprayed into the spray dryer through nozzles to give droplets with an average size in the range of 150-500 micrometer. In the spray-dryer, a hot inert air stream evaporated the water out of the droplets to give spherical granules with a size ranging from 100-450 micron. Dust formed during the drying process was removed in a separate stream. Subsequently, the granules were further dried in a fluid bed dryer to remove the remaining moisture.

### Example 7: Preparation of Amisulbrom 300g/Kg WDG

| **Ingredients** | **Quantity (%w/w)** |
|---|---|
| Amisulbrom | 31.0 |
| Sodium diisopropyl naphthalene sulfonate (Supragil WP) | 3.5 |
| Calcium lignosulfonate | 4.0 |
| Sodium lignosulfonate | 13.4 |
| Tartaric acid | 2.0 |
| SAG 1572 | 0.1 |
| Kaolin clay | q.s. |
| Total | 100 |

Amisulbrom, Supragil WP, Calcium lignosulfonate, Sodium lignosulfonate, Tartaric acid, kaolin clay and SAG 1572 were mixed in a given ratio provided in above table and granules were prepared as per the process of Example 6.

### Example 8: Preparation of Amisulbrom 300g/Kg WDG

| **Ingredients** | **Quantity (%w/w)** |
|---|---|
| Amisulbrom | 31.0 |
| Sodium diisopropyl naphthalene sulfonate (Supragil WP) | 3.5 |
| Calcium lignosulfonate | 19.5 |
| SAG 1572 | 0.1 |
| Kaolin clay | q.s. |
| Total | 100 |

Amisulbrom, Supragil WP, Calcium lignosulfonate, kaolin clay and SAG 1572 were mixed in a given ratio shown above and granules were prepared as per the process of Example 6.

### Effect of toxicity control agent on the formation of undesirable IT-4 metabolite

The effect of toxicity control agent on the formation of IT-4 was tested in the compositions prepared according to the present invention. Compositions of Example-1, 3 and 4 were prepared according to the process disclosed in the present invention. It was found that incorporation of toxicity control agent selected from carboxylic acids, sulfonic acids and their salts or combinations thereof successfully reduced the amount of IT-4 metabolite in said compositions. The effect of toxicity control agent on the amount of IT-4 metabolite formation is presented herein below as table 1.

**Table 1**

| **Composition** | **pH of milling slurry** | **pH of spray drying slurry** | **No of Nozzles** | **IT-4 content (ppm)** |
|---|---|---|---|---|
| Example-1 | 10.0 | 6.8 | 1 | 32-35 |
| Example-3 | 4.0 | 5.0 | 1 | 23-30 |
| Example-4 | 4.6 | 5.5 | 1 | 22-25 |

### Storage stability of the composition

The compositions as described in example 1, 3 and 4 were tested for storage stability. The method for accelerated storage stability is the Collaborative International Pesticides Analytical Council (CIPAC). The CIPAC method studies samples stored at 54°C over a period of 2 weeks. All the compositions prepared according to the process disclosed in the present invention found to possess better stability profile. The compositions found to have a significant influence on the formation of IT-4 after storage at increased temperatures.

The results presented in Table 3 suggests that addition of toxicity control agent improves the chemical stability of the formulation. The most stable formulation, in terms of formation of IT-4 after accelerated storage, was composition disclosed as example-4. The content of IT-4 increased only two times after storage for 2 weeks at 54°C.

**Table 2**

| | | **Initial** | **After 2 weeks at 54°C** |
|---|---|---|---|
| Composition | pH of product | Content IT-4 (ppm) | Content IT-4 (ppm) |
| Example-1 | 7.2 | 32 | 133 |
| Example-3 | 6.3 | 23 | 91 |
| Example-4 | 6.7 | 23 | 44 |

### Specification of finished products:

Compositions were prepared according to the present invention on different nozzle capacity and tested for various standard parameters of finished products as shown in table 4. Example 1, 2 and 5 were taken to test various processing parameters. The batches were selected on the basis of capacity. The composition of Example-1 was prepared using one nozzle for spray drying with capacity of 10mT/day. Similarly, composition of Example-2 was prepared using two nozzle for spray drying with capacity of 20mT/day and composition of Example-3 was prepared using three nozzle for spray drying with capacity of 30mT/day. Composition of Example-1 produced at low capacity found to contain least content of IT-4, i.e. between 32-35 ppm. This suggests that the low processing temperature leads to lesser amount of undesirable IT-4 contents.

All the above-mentioned present compositions found to have water content between 1.4% to 1.8% which is well within the maximum permitted limit of 2%. Suspensibility observed well above the minimum standard. Compositions shown to possess good wettability. ETU content was quite less than the permitted limit. The pH of 1% dispersion was maintained between 7.2 to 7.6. Similarly, batches passed the density, dispersibility, dustiness and foam tests as represented in table 3. More than 90% granule size distribution ranged between 106-500 µm.

**Table 3**

| Test Parameters | | **Standard Specification** | **Low capacity** | **Medium capacity** | **High capacity** |
|---|---|---|---|---|---|
| | | | Example-1 | Example-2 | Example 5 |
| Active content % | Mancozeb | 600 +/-25 | 610 | 605 | 606 |
| | Amisulbrom | 30 +/-3 | 29.3 | 29.4 | 29.2 |
| IT-4 content (ppm) | | Max 40 | 32-35 | 70-76 | - |
| Water content % | | Max 2 | 1.5-1.9 | 1.4-1.7 | 1.8 |
| We t sieve residue (%) | 45 µm | Max 0.3 | 0.05 | 0.06 | 0.14 |
| | 150 µm | Max 0.05 | <0.01 | <0.01 | <0.01 |
| Suspensibility (%) | Mancozeb | Min 70 | 84 | 84 | 74 |
| | Amisulbrom | Min 70 | 93 | 89 | 82 |
| Wettability | | Max 15 | 1 | 1 | 1 |
| pH (1% dispersion) | | 6.0-8.0 | 7.2 | 7.6 | 7.2 |
| Particle size | d(0.5) | | 3.29 | 3.32 | 3.09 |
| | d(0.9) | | 10.4 | 10.8 | 9.7 |
| Dispersibility (%) | | Min 70 | 95 | 97 | - |
| Dustiness | | Target 15 | 6.4 | 10.4 | 16.9 |
| Foam (ml) | 1 min | Max 50 | 0 | 4 | 6 |
| | 10 min | Max 20 | 0 | 0 | 0 |
| Granule size distribution | >600 | Max 15 | 0 | 0.02 | 0 |
| | >500 | | 0 | 0.34 | 2.5 |
| | >250 | | 45.0 | 51.9 | 62.8 |
| | >106 | | 92.4 | 93.4 | 95.5 |
| | >50 | | 100 | 99.9 | 99.7 |
| | <50 | Max 0.5 | 0 | 0.1 | 0.3 |
| | 500<x<106 | Min 90 | 92.4 | 93.1 | 93.0 |

Therefore, present invention satisfactorily found to reduce the IT-4 content in the amisulbrom based composition. Toxicity control agents selected from organic acid or their salts found to be very effective in regulating the amount of undesirable IT-4 metabolite. The composition of the invention exhibits high dispersibility, and suspensibility. Additionally, there are several other advantages with regards to packing, transportation, storage and toxicity. The compositions are dust-free, easy to pour and measure while being safe to the user. The compositions of the invention provide for a safer ecosystem by loading lesser toxicant in the composition.

Further it can be seen from Fig. 1 that the composition of the present invention showed good efficacy against potato foliar blight control than untreated treatments and market standards (Shirlan (fluazinam SC) and Remiltine S Pepite (cymoxanil+mancozeb WG).

## Claims

1. A stable agrochemical composition comprising:
a) a sulfamoyl compound; and
b) a toxicity control agent selected from at least one organic acid and its salts.

2. The composition according to claim 1 wherein, said organic acid and their salts used as toxicity control agent is selected from at least one carboxylic acids, sulfonic acids and their salts or combinations thereof, wherein said toxicity control agent regulates formation of undesirable IT-4 metabolite.

3. The composition according to claim 1 or claim 2 wherein said toxicity control agent is carboxylic acid and alkali and alkaline earth metal salts of sulfonic acid, and preferably wherein said toxicity control agent is selected from of citric acid, tartaric acid or alkali and alkaline earth metal salts of lignosulfonic acid.

4. The composition according to any one of the preceding claims wherein said toxicity control agent is present in amount of about 0.1% to about 40% w/w of the composition.

5. The composition according to any one of the preceding claims wherein said sulfamoyl compound is amisulbrom.

6. The composition according to claim 2 or any one of claims 3 to 5 when dependent upon claim 2 wherein undesirable IT-4 metabolite is reduced to below 50 ppm.

7. The composition according to any one of the preceding claims further comprising at least one another fungicide.

8. The composition according to claim 7 wherein said fungicide is selected from azithiram, carbamorph, cufraneb, cuprobam, dazomet, disulfiram, etem, ferbam, mancopper, mancozeb, maneb, metam, metiram, milneb, nabam, polycarbamate, propineb, tecoram, thiram, zineb, ziram or combinations thereof.

9. The composition according to claim 7 wherein said stable composition comprises a) amisulborm, b) mancozeb and c) a toxicity control agent selected from at least one organic acid and its salts consisting of carboxylic acids, sulfonic acids and their salt.

10. A stable agrochemical composition comprising:
a) a sulfamoyl compound;
b) at least one another fungicide; and
c) a toxicity control agent selected from at least one organic acid and its salts, wherein said toxicity control agent regulates formation of undesirable IT-4 metabolite of sulfamoyl compound.

11. The composition according to any one of the preceding claims, which is a solid formulation.

12. A process for preparation of stable agrochemical composition comprising a) atleast one sulfamoyl compound, and b) a toxicity control agent selected from organic acid and its salts thereof; said process comprising steps of:
(a) adding an effective amount of sulfamoyl compound and optionally other auxiliary agent in water and homogenizing them to obtain premix slurry;
(b) adding a toxicity control agent selected from organic acid or its salts to the premix slurry of step (a);
(c) spray drying the slurry to obtain granular formulation.

13. A process for preparation of stable agrochemical composition comprising a) atleast one sulfamoyl compound, b) one or more fungicide, and c) a toxicity control agent selected from organic acid and its salts thereof wherein; said process comprising steps of:
(a) adding an effective amount of sulfamoyl compound and optionally other auxiliary agent in water and homogenizing them to obtain premix slurry;
(b) adding a toxicity control agent selected from organic acid or its salts and atleast one more fungicide to the premix slurry of step (a);
(c) spray drying the slurry to obtain granular formulation.

14. A method of controlling unwanted pests comprising applying an agrochemically effective amount of stable agrochemical compositions comprising:
(a) a sulfamoyl compound; and
(b) a toxicity control agent selected from organic acid and its salts; wherein said toxicity control agent regulates formation of undesirable IT-4 metabolite;
to the pests or to their locus.

15. The method of controlling unwanted pests as claimed in claim 14 wherein said method comprising applying an agrochemically effective amount of stable agrochemical compositions comprising:
(a) a sulfamoyl compound;
(b) at least one another fungicide; and
(c) a toxicity control agent selected from organic acid and its salts consisting of carboxylic acids, sulfonic acids and their salt; wherein said toxicity control agent regulates formation of undesirable IT-4 metabolite;
to the pests or to their locus.
